# EUROPEAN PATENT APPLICATION

(11) **EP 4 394 973 A1**
(43) Date of publication of application: **03.07.2024**
(21) Application number: 23205292.8
(22) Date of filing: 23.10.2023
(51) Int. Cl.: H01M 10/0525, H01M 10/0567

(54) **ELECTROLYTE FOR RECHARGEABLE LITHIUM BATTERIES AND RECHARGEABLE LITHIUM BATTERIES**

(30) Priority: 29.12.2022 KR 20220189450
(71) Applicant: Samsung SDI Co., Ltd., Yongin-si, Gyeonggi-do 17084 (KR)
(72) Inventor: LEE, Harim, 17084 Yongin-si (KR); KIM, Yunhee, 17084 Yongin-si (KR); YU, Arum, 17084 Yongin-si (KR); BAE, Tae Hyon, 17084 Yongin-si (KR); KIM, Sanghyung, 17084 Yongin-si (KR); SON, Seunghyeon, 17084 Yongin-si (KR); KIM, Sundae, 17084 Yongin-si (KR); YANG, Yeji, 17084 Yongin-si (KR)
(74) Representative: Russell, Tim

(57) **Abstract**

Provided is an electrolyte for a rechargeable lithium battery comprising a non-aqueous organic solvent, a lithium salt, and an additive, wherein the additive comprises (i) a first compound that is a compound represented by Chemical Formula 1, CsPF₆, or a combination thereof and (ii) a second compound that is a compound represented by Chemical Formula 2-1, a compound represented by Chemical Formula 2-2, or a combination thereof. The chemical formulas and their definitions are as described in the specification.

## Description

### BACKGROUND OF THE INVENTION

### (a) Field of the Invention

An electrolyte for rechargeable lithium batteries and rechargeable lithium batteries comprising the same are disclosed.

### (b) Description of the Related Art

A rechargeable lithium battery is widely used as a driving power source for mobile information terminals such as smart phones and laptops because it is easy to carry while implementing high energy density. Recently, a rechargeable lithium battery secured with high capacity, high energy density, and high safety has been actively studied for use as a power source for driving a hybrid vehicle or an electric vehicle, or a power source for power storage.

In a rechargeable lithium battery, an electrolyte plays an important role in delivering lithium ions, and among them, an electrolyte comprising an organic solvent and a lithium salt is most commonly used because it can exhibit extremely high ionic conductivity. The electrolyte plays an important role in determining safety and performance of the rechargeable lithium battery.

Recently, as high-capacity, high-energy density batteries are required, batteries need to be designed to be driven at a high voltage of 4.5 V or more as well as increase high density of electrodes. However, under severe conditions such as a high voltage or high-speed charging, since a positive electrode is deteriorated, and lithium dendrites grow on surface of a negative electrode, which accelerate a side reaction between the electrodes and the electrolyte, there is a battery safety problem due to a decrease in a battery cycle-life, gas generation, and the like.

In order to solve this problem, methods of protecting the electrodes through a surface treatment to suppress the side reaction of the electrodes with the electrolyte have been suggested. However, the methods have been reported to have problems that the surface treatment of the positive electrode exhibits no sufficient protection effect under high voltage driving conditions, while the surface treatment of the negative electrode deteriorates capacity. Accordingly, while a high-capacity electrode drivable at a high voltage is designed, development of an electrolyte capable of simultaneously improving the battery safety and performance is required.

### SUMMARY OF THE INVENTION

Provided are an electrolyte for a rechargeable lithium battery and a rechargeable lithium battery comprising the same, wherein the electrolyte is capable of increasing performance reliability of a high-capacity and high-voltage battery system and improving cycle-life characteristics and safety, particularly at a low temperature of 15 °C.

In an embodiment, an electrolyte for a rechargeable lithium battery comprises a non-aqueous organic solvent, a lithium salt, and an additive, wherein the additive comprises (i) a first compound that is a compound represented by Chemical Formula 1, CsPF₆, or a combination thereof, and (ii) a second compound that is a compound represented by Chemical Formula 2-1, a compound represented by Chemical Formula 2-2, or a combination thereof.

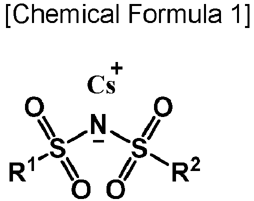

In Chemical Formula 1, R¹ and R² are each independently a fluoro group or a C1 to C4 fluoroalkyl group substituted with at least one fluoro group.

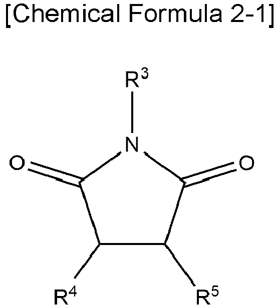

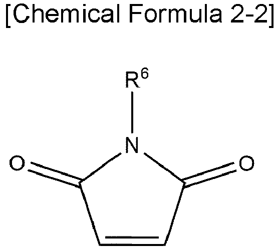

R³ in Chemical Formula 2-1 and R⁶ in Chemical Formula 2-2 are each independently a substituted or unsubstituted C1 to C8 alkyl group, a substituted or unsubstituted C3 to C10 cycloalkyl group, a substituted or unsubstituted C6 to C12 aryl group, a substituted or unsubstituted C1 to C8 alkoxy group, a substituted or unsubstituted C1 to C8 alkoxycarbonyl group, a halogen group, a cyano group, a hydroxy group, or a thiol group.

In Chemical Formula 2-1, R⁴ and R⁵ are each independently hydrogen, a substituted or unsubstituted C1 to C8 alkyl group, a substituted or unsubstituted C3 to C10 cycloalkyl group, a substituted or unsubstituted C6 to C12 aryl group, a substituted or unsubstituted C1 to C8 alkoxy group, a substituted or unsubstituted C1 to C8 alkoxycarbonyl group, a halogen group, a cyano group, a hydroxy group, or a thiol group.

Another embodiment provides a rechargeable lithium battery comprising a positive electrode comprising a positive electrode active material, a negative electrode comprising a negative electrode active material, a separator between the positive electrode and the negative electrode, and the aforementioned electrolyte.

The rechargeable lithium battery according to an embodiment has improved cycle-life characteristics and safety at a low temperature of 15 °C while implementing high-capacity and high-voltage characteristics.

### BRIEF DESCRIPTION OF THE DRAWINGS

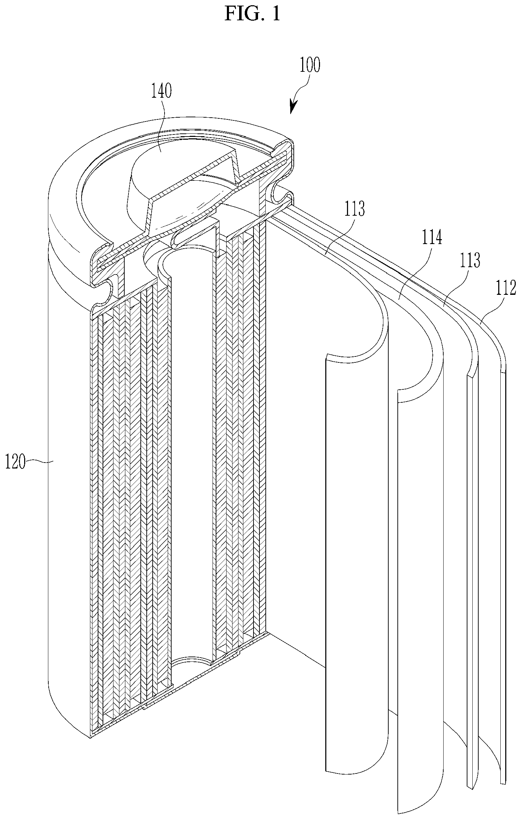

FIG. 1 is a schematic view illustrating a rechargeable lithium battery according to an embodiment.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by an optical microscope photograph such as a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution.

Herein, "or" is not to be construed as an exclusive meaning, for example, "A or B" is construed to include A, B, A+B, and the like.

As used herein, unless otherwise defined, "substituted" refers to replacement of at least one hydrogen in a substituent or compound by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

Specifically, "substituted" refers to replacement of at least one hydrogen in a substituent or compound by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, "substituted" refers to replacement of at least one hydrogen in a substituent or compound by deuterium, a halogen group, a C1 to C20 alkyl group, a C6 to C30 aryl group, a C1 to C10 fluoroalkyl group, or a cyano group. Alternatively, "substituted" refers to replacement of at least one hydrogen in a substituent or compound by deuterium, a halogen group, a C1 to C5 alkyl group, a C6 to C18 aryl group, a C1 to C5 fluoroalkyl group, or a cyano group. For example, "substituted" refers to replacement of at least one hydrogen in a substituent or compound by deuterium, a cyano group, a halogen group, a methyl group, an ethyl group, a propyl group, a butyl group, a phenyl group, a biphenyl group, a terphenyl group, a trifluoromethyl group, or a naphthyl group.

Expressions such as C1 to C30 mean that the number of carbon atoms is 1 to 30.

### Electrolyte

In an embodiment, an electrolyte for a rechargeable lithium battery comprises a non-aqueous organic solvent, a lithium salt, and an additive, wherein the additive comprises (i) a first compound that is a compound represented by Chemical Formula 1, CsPF₆, or a combination thereof and (ii) a second compound that is a compound represented by Chemical Formula 2-1, a compound represented by Chemical Formula 2-2, or a combination thereof.

Herein, the additive is a concept of including both the first compound and the second compound, wherein the first compound is a concept of including only one or both of the compound represented by Chemical Formula 1 and CsPF₆ (e.g., a mixture of two compounds), and the second compound is a concept of including only one or both of the compound represented by Chemical Formula 2-1 and the compound represented by Chemical Formula 2-2.

The electrolyte may improve overall performance of the battery by forming a stable film on the interface of electrodes and the electrolyte during the battery operation, improving safety and cycle-life characteristics of a battery designed for high capacity and high voltage and particularly, having an excellent effect of improving low-temperature cycle-life characteristics. The electrolyte comprises both the first and second compounds as the additive, compared with a case of comprising neither first compound nor second compound or either one thereof, and thus may improve low-temperature cycle-life characteristics of a rechargeable lithium battery and in addition, control gas generation inside the battery according to charges and discharges and thus have an excellent effect of improving the safety.

### Additives

In the first compound, the compound represented by Chemical Formula 1 may be referred to as a cesium sulfonylimide salt or a cesium fluorinated sulfonylimide salt.

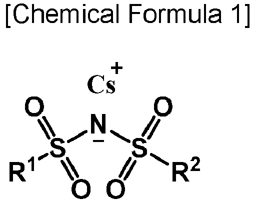

In Chemical Formula 1, R¹ and R² are each independently a fluoro group or a C1 to C4 fluoroalkyl group substituted with at least one fluoro group.

The first compound may be decomposed in the electrolyte even under high voltage conditions to form a stable film on the surface of the electrode, and may effectively control the elution of lithium ions from the electrode to prevent electrode decomposition. Specifically, the first compound is reduced and decomposed before non-aqueous organic solvents such as carbonate-based solvents to form a solid-electrolyte-interface (SEI) film at the interface between the negative electrode and the electrolyte, thereby preventing decomposition of the electrolyte and electrode, and suppressing an increase in battery internal resistance due to gas generation. It is understood that the SEI film is partially decomposed through a reduction reaction during charging and discharging and moves to the surface of the positive electrode to form a film at the interface between the positive electrode and the electrolyte through an oxidation reaction, thereby preventing the decomposition of the positive electrode surface and the oxidation reaction of the electrolyte.

For example, in Chemical Formula 1, R¹ and R² may each independently be a fluoro group or a C1 to C4 fluoroalkyl group substituted with at least two fluoro groups. Alternatively, R¹ and R² may each independently be a fluoro group or a C1 to C4 fluoroalkyl group substituted with at least three fluoro groups. For example, R¹ and R² may each independently be a fluoro group or a C1 to C3 fluoroalkyl group substituted with at least three fluoro groups. Alternatively, R² and R³ may each independently be a fluoro group or a C1 to C2 fluoroalkyl group substituted with at least three fluoro groups.

For example, the compound represented by Chemical Formula 1 may be represented by Chemical Formula 1-1 or 1-2.

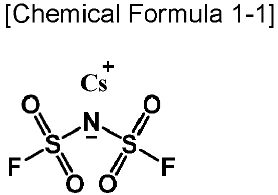

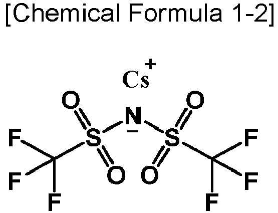

The first compound may be included in an amount of about 0.01 part by weight to about 1.9 parts by weight, for example, about 0.05 parts by weight to about 1.7 parts by weight, about 0.1 parts by weight to about 1.5 parts by weight, about 0.1 parts by weight to about 1.3 parts by weight, about 0.1 parts by weight to about 1.0 part by weight, about 0.1 parts by weight to about 0.7 parts by weight, or 0.01 parts by weight to 1.0 parts by weight based on 100 parts by weight of the total amount of the non-aqueous organic solvent and the lithium salt. When the first compound is included in the above range, low-temperature cycle-life characteristics and safety of the battery may be improved without adversely affecting the overall performance of the battery. For example, if the content of the first compound is excessive, low-temperature cycle-life characteristics may deteriorate or the amount of gas generated in the battery may increase, resulting in safety problems.

The second compound is a compound represented by Chemical Formula 2-1 or a compound represented by Chemical Formula 2-2, or a combination thereof. The compound represented by Chemical Formula 2-1 may be referred to as a succinimide derivative, and the compound represented by Chemical Formula 2-2 may be referred to as a maleimide derivative. The second compound may lead to the formation of a stable SEI film even under high-capacity and high-voltage conditions, and may contribute to improving battery life characteristics and reducing gas generation in the battery even at low tem peratures.

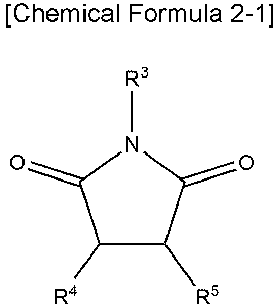

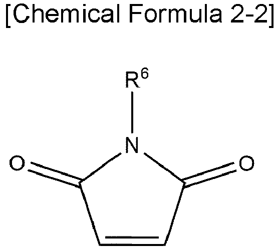

R³ in Chemical Formula 2-1 and R⁶ in Chemical Formula 2-2 are each independently a substituted or unsubstituted C1 to C8 alkyl group, a substituted or unsubstituted C3 to C10 cycloalkyl group, a substituted or unsubstituted C6 to C12 aryl group, a substituted or unsubstituted C1 to C8 alkoxy group, a substituted or unsubstituted C1 to C8 alkoxycarbonyl group, a halogen group, a cyano group, a hydroxy group, or a thiol group.

In Chemical Formula 2-1, R⁴ and R⁵ are each independently hydrogen, a substituted or unsubstituted C1 to C8 alkyl group, a substituted or unsubstituted C3 to C10 cycloalkyl group, a substituted or unsubstituted C6 to C12 aryl group, a substituted or unsubstituted C1 to C8 alkoxy group, a substituted or unsubstituted C1 to C8 alkoxycarbonyl group, a halogen group, a cyano group, a hydroxy group, or a thiol group.

R³ in Chemical Formula 2-1 and R⁶ in Chemical Formula 2-2 are functional groups bonded to nitrogen, and may be, for example, a substituted or unsubstituted C1 to C8 alkyl group, a substituted or unsubstituted C3 to C10 cycloalkyl group, a substituted or unsubstituted C1 to C8 alkoxy group, or a substituted or unsubstituted C1 to C8 alkoxycarbonyl group. As a specific example, R³ in Chemical Formula 2-1 and R⁶ in Chemical Formula 2-2 may each independently be a substituted or unsubstituted C1 to C8 alkyl group or a substituted or unsubstituted C3 to C10 cycloalkyl group.

The C1 to C8 alkyl group may be, for example, a C1 to C7 alkyl group, a C1 to C6 alkyl group, a C1 to C5 alkyl group, or a C1 to C4 alkyl group.

For example, R³ in Chemical Formula 2-1 and R⁶ in Chemical Formula 2-2 may each independently be methyl, ethyl, n-propyl, isopropyl, cyclopropyl, n-butyl, sec-butyl, isobutyl, tert- butyl, cyclobutyl, methoxy, ethoxy, propoxy, or butoxy. In this case, the second compound may improve the low-temperature cycle-life characteristics of the high-voltage and high-output batteries without adversely affecting the overall performance of the battery.

In Chemical Formula 2-1, R⁴ and R⁵ are substituted functional groups in a ring, and may be, for example, hydrogen, a substituted or unsubstituted C1 to C8 alkyl group, a halogen group, a cyano group, a hydroxyl group, or a thiol group. As a specific example, R⁴ and R⁵ may each independently be hydrogen, a substituted or unsubstituted C1 to C5 alkyl group, or a thiol group.

For example, Chemical Formula 2-1 may be represented by Chemical Formula 2-1A, and Chemical Formula 2-2 may be represented by Chemical Formula 2-2A. These compounds are excellent in improving low-temperature characteristics of high-voltage and high-output batteries.

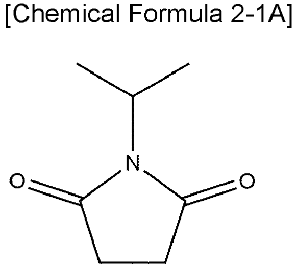

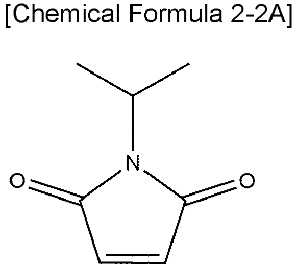

The second compound may be included in an amount of about 0.1 parts by weight to about 4.9 parts by weight, for example about 0.1 parts by weight to about 4 parts by weight, about 0.1 parts by weight to about 3 parts by weight, or about 0.1 parts by weight to about 2 parts by weight based on 100 parts by weight of the total amount of the non-aqueous organic solvent and the lithium salt. In this case, the electrolyte forms a stable SEI film to improve overall performance of the battery, improve battery cycle-life characteristics at low temperatures, and effectively control the amount of gas generated in the battery. For example, when the second compound is excessively included, battery reliability may not be secured due to an excessive amount of gas generated in the battery according to charging and discharging.

A weight ratio of the first compound to the second compound may be, for example, about 1:1 to about 1:20, about 1:1 to about 1:16, about 1:1 to about 1:12, or about 1:2 to about 1:10. When the two compounds are included in such a content ratio, the battery cycle-life characteristics at low temperatures may be greatly improved and the amount of gas generated in the battery may be effectively suppressed.

The additive of the electrolyte may further comprise a third compound represented by Chemical Formula 3 in addition to the first compound and the second compound. The third compound may be referred to as a cesium fluorinated sulfonylimide salt, and has a different structural formula from the first compound. The compound represented by Chemical Formula 3 is decomposed in the electrolyte during battery operation to form a stable film on the surface of the electrode, and may effectively control the elution of lithium ions from the electrode.

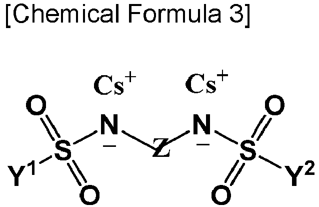

In Chemical Formula 23, Z is C(=O) or S(=O)₂, and Y' and Y² are each independently a fluoro group or a C1 to C5 fluoroalkyl group substituted with at least one fluoro group.

In the definition of Y' and Y², the C1 to C5 fluoroalkyl group substituted with at least one fluoro group may be, for example, a C1 to C5 fluoroalkyl group substituted with at least two fluoro groups, or a C1 to C5 fluoroalkyl group substituted with at least three fluoro groups, and the C1 to C5 fluoroalkyl group may be, for example, a C1 to C4 fluoroalkyl group, a C1 to C3 fluoroalkyl group, or a C1 to C2 fluoroalkyl group.

The third compound may be, for example, represented by any one of Chemical Formulas 3-1 to 3-8.

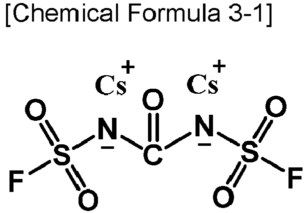

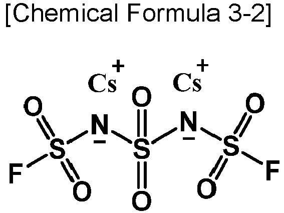

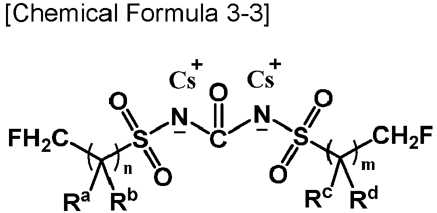

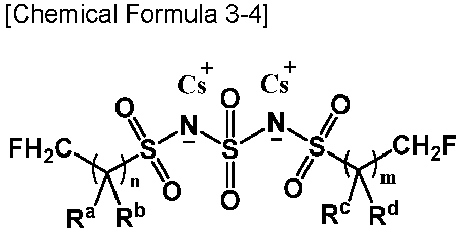

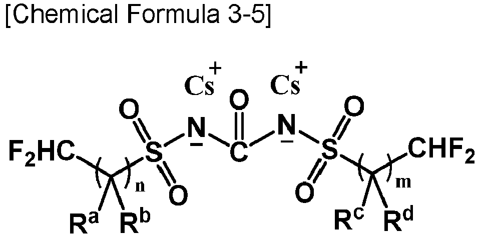

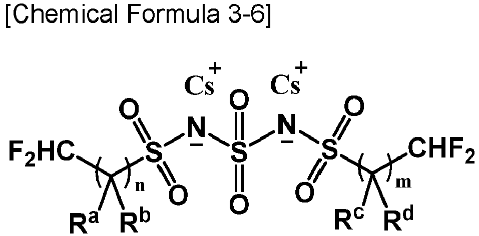

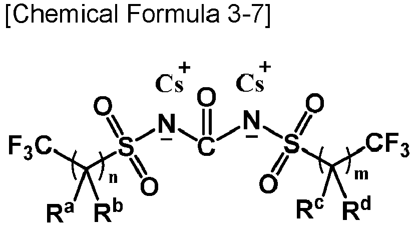

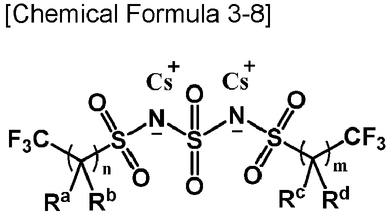

In Chemical Formulas 3-3 to 3-8, R^{a}, R^{b}, R^{c}, and R^{d} are each independently hydrogen or a fluoro group, and n and m are each independently an integer of 0 or 4. For example, n and m may each independently be 0, 1, or 2.

The third compound may be included in an amount of about 0.01 parts by weight to about 5 parts by weight, for example about 0.05 parts by weight to about 4.0 parts by weight, about 0.1 parts by weight to about 3.0 parts by weight, about 0.1 parts by weight to about 4.0 parts by weight, about 0.1 parts by weight to about 1.0 part by weight, or about 0.1 parts by weight to about 0.7 parts by weight based on 100 parts by weight of the total amount of the non-aqueous organic solvent and the lithium salt. When the third compound is included in the above range, the voltage resistance and oxidation resistance stability of the electrolyte may be improved without adversely affecting the overall performance of the battery, and the low-temperature performance of a battery designed for high capacity and high voltage may be improved.

The electrolyte may further comprise other additives in addition to the aforementioned additives, and the other additives may comprise at least one selected from vinylene carbonate (VC), fluoroethylene carbonate (FEC), difluoroethylene carbonate (DFEC), chloroethylene carbonate (CEC), dichloroethylene carbonate (DCEC), bromoethylene carbonate (BEC), dibromoethylene carbonate (DBEC), nitroethylene carbonate, cyanoethylene carbonate, vinylethylene carbonate (VEC), succinonitrile (SN), adiponitrile (AN), 1,3,6-hexane tricyanide (HTCN), propene sultone (PST), propane sultone (PS), lithium tetrafluoroborate (LiBF₄), lithium difluorophosphate (LiPO₂F₂), 2-fluoro biphenyl (2-FBP), or a combination thereof.

When the electrolyte further comprises such other additives, high-temperature and low-temperature storage characteristics may be improved by effectively controlling the gas generated from the positive electrode and the negative electrode.

The other additives may be included in an amount of about 0.1 part by weight to about 20 parts by weight, for example, for example about 0.2 parts by weight to about 15 parts by weight, or about 0.5 parts by weight to about 10 parts by weight based on 100 parts by weight of the total amount of the non-aqueous organic solvent and the lithium salt. When other additives are included within the above ranges, a rechargeable lithium battery having improved safety and cycle-life characteristics such as effectively controlling gas generated from an electrode without adversely affecting the overall performance of the battery may be implemented.

### Non-Aqueous Organic Solvent

The non-aqueous organic solvent serves as a medium through which ions involved in the electrochemical reaction of the battery may be transferred. As the non-aqueous organic solvent, a carbonate-based solvent, an ester-based solvent, an ether-based solvent, a ketone-based solvent, an alcohol-based solvent, an aprotic solvent, or a combination thereof may be used.

In an embodiment, the non-aqueous organic solvent may comprise a carbonate-based solvent and an ester-based solvent. For example, the non-aqueous organic solvent may comprise a carbonate-based solvent and a C1 to C8 alkyl propionate. In this case, the electrolyte may realize excellent voltage resistance and oxidation resistance stability, and is suitable for application to the aforementioned high-capacity, high-voltage electrode design.

The carbonate-based solvent may comprise, for example, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or a combination thereof.

The ester-based solvent may comprise, for example, methyl acetate, ethyl acetate, n-propyl acetate, dimethyl acetate, methyl propionate, ethyl propionate, propyl propionate, butyl propionate, γ-butyrolactone, decanolide, valerolactone, mevalonolactone, caprolactone, or a combination thereof.

The ether-based solvent may comprise, for example, dibutyl ether, tetraglyme, diglyme, dimethoxyethane, 2-methyltetrahydrofuran, tetrahydrofuran, or a combination thereof.

The ketone-based solvent may be, for example, cyclohexanone, and the alcohol-based solvent may comprise, for example, ethyl alcohol, isopropyl alcohol, or a combination thereof. The aprotic solvent may comprise, for example nitriles such as R-CN (wherein, R is a C2 to C20 linear, branched, or cyclic hydrocarbon group and may comprise a double bond, an aromatic ring, or an ether bond), and the like, amides such as dimethyl formamide, and the like, dioxolanes such as 1,3-dioxolane, and the like, or a combination thereof.

The non-aqueous organic solvent may be used alone or in a mixture. When the organic solvent is used in a mixture, the mixture ratio may be controlled in accordance with a desirable battery performance.

According to an embodiment, when the non-aqueous organic solvent comprises the carbonate-based solvent and the ester-based solvent, about 10 volume% to about 60 volume% of the carbonate-based solvent and about 40 volume% to about 90 volume% of the ester-based solvent based on 100 volume% of the carbonate-based solvent and the ester-based solvent may be included. In this case, it is possible to improve the voltage resistance and oxidation resistance stability of the electrolyte in a high-capacity high-voltage battery system.

In addition, the carbonate-based solvent may comprise a cyclic carbonate and a chain carbonate. When the cyclic carbonate and the chain carbonate are mixed in a volume ratio of about 1:1 to about 1:9, the overall performance of the electrolyte may be improved.

The non-aqueous organic solvent may further comprise an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

The aromatic hydrocarbon-based solvent may be, for example, a compound represented by Chemical Formula I.

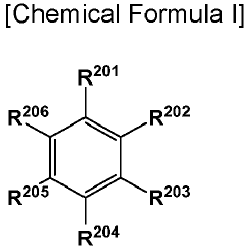

In Chemical Formula I, R²⁰¹ to R²⁰⁶ are the same or different and are at least one selected from hydrogen, a halogen group, a C1 to C10 alkyl group, and a C1 to C10 haloalkyl group.

The aromatic hydrocarbon-based solvent may comprise, for example, benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further comprise vinylene carbonate or an ethylene carbonate-based compound of Chemical Formula II as a cycle-life improving additive.

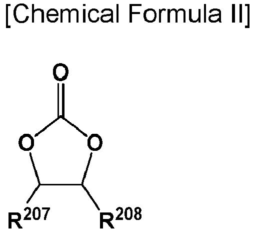

In Chemical Formula II, R²⁰⁷ and R²⁰⁸ are the same or different, and are selected from hydrogen, a halogen group, a cyano group, a nitro group, and fluorinated C1 to C5 alkyl group, provided that at least one of R²⁰⁷ and R²⁰⁸ is selected from a halogen group, a cyano group, a nitro group, and a fluorinated C1 to C5 alkyl group, but both of R²⁰⁷ and R²⁰⁸ are not simultaneously hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

### Lithium Salt

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide, LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxalato) phosphate, LiCl, Lil, LiB(C₂O₄)₂ (lithium bis(oxalato) borate, LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

### Rechargeable Lithium Battery

In an embodiment, a rechargeable lithium battery comprises a positive electrode comprising a positive electrode active material, a negative electrode comprising a negative electrode active material, a separator between the positive electrode and the negative electrode, and the aforementioned electrolyte. The aforementioned electrolyte is suitable for application to a high-capacity, high-voltage, or high-output battery, and the rechargeable lithium battery may be referred to as a 4.5 V class high-voltage rechargeable lithium battery.

FIG. 1 is a schematic view illustrating a rechargeable lithium battery according to an embodiment. Referring to FIG. 1, the rechargeable lithium battery 100 comprises a battery cell comprising a positive electrode 114, a negative electrode 112 facing the positive electrode 114, a separator 113 between the positive electrode 114 and the negative electrode 112, and an electrolyte impregnating them, a battery case 120 containing the battery cell, and a sealing member 140 sealing the battery case 120.

### Positive Electrode

The positive electrode 114 may comprise a current collector and a positive electrode active material layer on the current collector. The positive electrode active material layer may comprise a positive electrode active material and may optionally comprise a binder and/or a conductive material.

### Positive Electrode Active Material

The positive electrode active material according to an embodiment may comprise a lithium cobalt-based oxide. The lithium cobalt-based oxide refers to an oxide comprising lithium and cobalt, and optionally further comprising other elements in addition to lithium and cobalt. The positive electrode active material comprising lithium cobalt-based oxide may realize high capacity and high initial charge/discharge efficiency, may be suitable for high voltage and high-speed charging, and may exhibit excellent resistance characteristics, high-temperature performance, and cycle-life characteristics when used together with an electrolyte to be described later.

The lithium cobalt-based oxide may be specifically represented by Chemical Formula 4.

[Chemical Formula 4] Liₐ₁COₓ₁M¹_{y1}O_{2-b1}X_{b1}

In Chemical Formula 4, 0.9≤a1≤1.8, 0.7≤x1≤1, 0≤y1≤0.3, 0.9≤x1+y1≤1.1, 0≤b1≤0.1, M¹ is at least one element selected from Al, B, Ba, Ca, Ce, Cr, Cu, Fe, Mg, Mn, Mo, Ni, Se, Si, Sr, Ti, V, W, Y, Zn, and Zr, and X is at least one element selected from F, P, and S.

In Chemical Formula 4, x1 may be 0.8≤x1≤1, 0.9≤x1≤1, or 0.95≤x1<1. For example, M¹ may be at least one element selected from Al, Ca, Ce, Cr, Cu, Fe, Mg, Mo, Se, Sr, Ti, V, W, Y, Zn, and Zr. M¹ may increase structural stability of the lithium cobalt-based oxide at high voltage, and play a role of suppressing structural change or collapse due to movement of lithium ions.

The positive electrode active material may be in the form of particles comprising lithium cobalt-based oxide, and may be, for example, in the form of secondary particles in which a plurality of primary particles made of lithium cobalt-based oxide are aggregated. The secondary particles may have an average particle diameter (D50) of about 1 µm to about 30 µm. Herein, also below, the average particle diameter (D50) is measured by a particle size analyzer and may mean a diameter of particles whose cumulative volume is 50 volume% in the particle size distribution.

For example, the positive electrode active material may have a bimodal form in which large particles and small particles are mixed. The positive electrode active material comprises a first positive electrode active material that is particles comprising a lithium cobalt-based oxide and has an average particle diameter (D50) of about 9 µm to about 25 µm and a second positive electrode active material that is particles comprising a lithium cobalt-based oxide and has an average particle diameter (D50) of about 1 µm to about 8 µm. In this case, the first positive electrode active material may be included in an amount of about 60 wt% to about 90 wt%, and the second positive electrode active material may be included in an amount of about 10 wt% to about 40 wt% based on the total amount of first positive electrode active material and the second positive electrode active material. A positive electrode including such a positive electrode active material is advantageous in realizing high capacity and high energy density.

### Binder

The binder serves to well attach the positive electrode active material particles to each other and to well attach the positive electrode active material to the current collector. Examples of the binder may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The content of the binder in the positive electrode active material layer may be approximately about 0.1 wt% to about 5 wt% based on the total weight of the positive electrode active material layer.

### Conductive Material

The conductive material is included to provide electrode conductivity and any electrically conductive material may be used as a conductive material unless it causes a chemical change. Examples of the conductive material may comprise a carbon-based material such as natural graphite, artificial graphite, carbon black, acetylene black, ketjen black, a carbon fiber, carbon nanofiber, carbon nanotube, and the like; a metal-based material of a metal powder or a metal fiber comprising copper, nickel, aluminum, silver, and the like; a conductive polymer such as a polyphenylene derivative; or a mixture thereof.

The content of the conductive material in the positive electrode active material layer may be about 1 wt% to about 5 wt% based on the total weight of the positive electrode active material layer.

An aluminum foil may be used as the positive electrode current collector, but is not limited thereto.

### Negative Electrode

The negative electrode 112 may comprise a current collector and a negative electrode active material layer on the current collector. The negative electrode active material layer may comprise a negative electrode active material, and may optionally comprise a binder and/or a conductive material.

### Negative electrode active material

The negative electrode active material may comprise a material that reversibly intercalates/deintercalates lithium ions, a lithium metal, a lithium metal alloy, a material capable of doping/dedoping lithium, or transition metal oxide.

The material that reversibly intercalates/deintercalates lithium ions may comprise, for example crystalline carbon, amorphous carbon, or a combination thereof as a carbon-based negative electrode active material. The crystalline carbon may be irregular-shaped, plate-like, flake-like, spherical, or fiber-shaped natural graphite or artificial graphite and the amorphous carbon may be a soft carbon, a hard carbon, a mesophase pitch carbonization product, calcined coke, and the like.

The lithium metal alloy comprises an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material, wherein the Si-based negative electrode active material may comprise silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may comprise Sn, SnO₂, an Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn), and at least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be in the form of particles. An average particle diameter (D50) of the silicon-carbon composite particles may be, for example, about 0.5 µm to about 20 µm. Herein, the average particle diameter (D50) is measured by a particle size analyzer and may mean a diameter of particles whose cumulative volume is about 50 volume% in the particle size distribution. The silicon may be included in an amount of about 10 wt% to about 60 wt% and the carbon may be included in an amount of about 40 wt% to about 90 wt% based on 100 wt% of the silicon-carbon composite particle.

The silicon-carbon composite particle may include, for example, a core containing silicon particles and a carbon coating layer on a surface of the core. An average particle diameter (D50) of the silicon particles in the core may be about 10 nm to about 1 µm, or about 10 nm to about 200 nm. The silicon particle may exist alone, in the form of a silicon alloy, or in an oxidized form. The oxidized form of silicon may be represented as SiOₓ (0<x<2). In addition, the carbon coating layer may have a thickness of about 5 nm to about 100 nm.

For example, the silicon-carbon composite particle may comprise a core comprising silicon particles and crystalline carbon, and a carbon coating layer disposed on a surface of the core and comprising amorphous carbon. For example, in the silicon-carbon composite particle, the amorphous carbon may not exist in the core but only in the carbon coating layer.

The crystalline carbon may be artificial graphite, natural graphite, or a combination thereof, and the amorphous carbon may be coal-based pitch, mesophase pitch, petroleum-based pitch, coal-based oil, petroleum-based heavy oil, or a polymer resin (phenol resin, furan resin, polyimide resin, etc.). In this case, a content of the crystalline carbon may be about 10 wt% to about 70 wt%, and a content of the amorphous carbon may be about 20 wt% to about 40 wt% based on 100 wt% of the silicon-carbon composite particle.

In the silicon-carbon composite particle, the core may comprise a void in the central portion. The radius of the void may be about 30% to about 50% by length of the radius of the silicon-carbon composite particle.

The aforementioned silicon-carbon composite particle effectively may suppress problems such as volume expansion, structural collapse, or particle crushing due to charging and discharging to prevent the disconnection of the conductive path, may realize high capacity and high efficiency, and may be used under high-voltage or high-speed charging condition.

A negative electrode active material according to an embodiment may comprise both a carbon-based negative electrode active material and a silicon-based negative electrode active material. In this case, the silicon-based negative electrode active material may be included in an amount of about 0.1 wt% to about 20 wt%, for example about 1 wt% to about 10 wt%, about 2 wt% to about 7 wt%, or about 2.5 wt% to about 5 wt% based on the total amount of the carbon-based negative electrode active material and the silicon-based negative electrode active material. In this case, high capacity may be implemented and it is advantageous for high-voltage and high-speed charging.

### Binder

The binder serves to well adhere the negative electrode active material particles to each other and also to adhere the negative electrode active material to the current collector. The binder may be a water-insoluble binder, a water-soluble binder, or a combination thereof.

Examples of the water-insoluble binder comprise polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may be a rubber-based binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included as a type of thickener. As the cellulose-based compound, one or more of carboxymethyl cellulose, hydroxypropylmethyl cellulose, methyl cellulose, or alkali metal salts thereof may be mixed and used. The alkali metal may be Na, K, or Li. The amount of the thickener used may be 0.1 parts by weight to about 3 parts by weight based on about 100 parts by weight of the negative electrode active material.

A content of the binder may be about 0.1 wt% to about 5 wt% based on 100 wt% of the negative electrode active material layer.

### Conductive Material

The conductive material is included to provide electrode conductivity and any electrically conductive material may be used as a conductive material unless it causes a chemical change. Examples of the conductive material may comprise a carbon-based material such as natural graphite, artificial graphite, carbon black, acetylene black, ketjen black, a carbon fiber, a carbon nanofiber, a carbon nanotube, and the like; a metal-based material of a metal powder or a metal fiber comprising copper, nickel, aluminum, silver, and the like; a conductive polymer such as a polyphenylene derivative; or a mixture thereof.

The negative electrode current collector may comprise one selected from a copper foil, a nickel foil, a stainless steel foil, a titanium foil, a nickel foam, a copper foam, a polymer substrate coated with a conductive metal, and a combination thereof.

### Separator

The separator 113 separates a positive electrode 114 and a negative electrode 112 and provides a transporting passage for lithium ions and may be any generally-used separator in a lithium ion battery. In other words, the separator may have low resistance to ion transport and excellent impregnation for an electrolyte. For example, the separator may comprise a glass fiber, polyester, polyethylene, polypropylene, polytetrafluoroethylene, or a combination thereof and may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator comprising a ceramic component or a polymer material may be used. Optionally, it may have a monolayered or multi-layered structure.

Rechargeable lithium batteries may be classified as lithium ion batteries, lithium ion polymer batteries, and lithium polymer batteries according to the presence of a separator and the type of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for these batteries pertaining to this disclosure are well known in the art.

The rechargeable lithium battery according to an embodiment may be used in an electric vehicle (EV), a hybrid electric vehicle such as a plug-in hybrid electric vehicle (PHEV), and portable electronic device because it implements a high capacity and has excellent storage stability, cycle-life characteristics, and high rate characteristics at high temperatures.

Hereinafter, examples of the present invention and comparative examples are described. However, the examples are for the purpose of illustration and are not to be construed as limiting the present invention.

### Example 1

### (1) Manufacture of Positive Electrode

A first positive electrode active material (LiCo_{0.974}Al_{0.0210}Mg_{0.005}O₂) having an average particle diameter (D50) of about 20 µm and a second positive electrode active material (LiCo_{0.9823}Al_{0.0127}Mg_{0.005}O₂) having an average particle diameter (D50) of about 4 µm are mixed in a weight ratio of 8:2 to prepare a positive electrode active material.

95 wt% of the prepared positive electrode active material, 3 wt% of a polyvinylidene fluoride binder, and 2 wt% of a ketjen black conductive material are mixed in an N-methylpyrrolidone solvent to prepare a positive electrode active material slurry. The positive electrode active material slurry is coated on an aluminum current collector, dried, and then compressed to prepare a positive electrode.

### (2) Manufacture of Negative Electrode

A graphite negative electrode active material, a styrene-butadiene rubber binder, and carboxymethylcellulose are mixed in a weight ratio of 98:1:1, respectively, and dispersed in distilled water to prepare a negative electrode active material slurry. The negative electrode active material slurry is coated on a copper current collector, dried, and then compressed to manufacture a negative electrode.

### (3) Preparation of Electrolyte

Ethylene carbonate (EC), propylene carbonate (PC), ethyl propionate (EP), and propyl propionate (PP) are mixed in a volume ratio of 10:15:30:45 to prepare a non-aqueous organic solvent. LiPF₆ lithium salt is dissolved at a concentration of 1.3 M in the prepared non-aqueous organic solvent to prepare a basic electrolyte. 0.25 parts by weight of the compound represented by Chemical Formula 1-1 and 1 part by weight of the compound represented by Chemical Formula 2-2A (1-isopropyl-1H-pyrrole-2,5-dione) are added to 100 parts by weight of the basic electrolyte to prepare an electrolyte.

### (4) Manufacture of Rechargeable Lithium Battery Cell

A polyethylene polypropylene multilayer separator is disposed between the prepared positive electrode and negative electrode, the resultant is inserted into a pouch cell, and then the prepared electrolyte is injected to manufacture a 4.5 V pouch-type full cell.

### Example 2 and Comparative Examples 1 to 6

An electrolyte and a rechargeable lithium battery cell are manufactured in the same manner as in Example 1 except that each content of the compounds represented by Chemical Formulas 1-1 and 2-1A and in the electrolyte is changed as shown in Table 1 below.

### Evaluation Example 1: Evaluation of 15 °C Low-temperature Cycle-life Characteristics and Thickness Increase Rate of Battery Cell

The rechargeable lithium battery cells of Examples 1 to 2 and Comparative Examples 1 to 6 are charged to an upper limit of 4.5 V at 0.2 C (CC-CV mode, 0.02C cut-off) at 15 °C, paused for 10 minutes, and discharged to 2.75 V at 0.2 C (CC mode) to perform initial charge and discharge.

Subsequently, the cells are 400 times or more charged under conditions of 2.0 C, 4.16 V (CC-CV, 1.4 C cut-off); 1.4 C, 4.32 V (CC-CV, 1.0 C cut-off); 1.0 C, 4.5 V (CC-CV, 0.02 C cut-off) and discharged to 3.0 V at 1.0 C (CC) to calculated a ratio of discharge capacity at the 400 cycles to the initial discharge capacity, and the results are shown as capacity retention in Table 1 below.

In addition, a ratio of a battery thickness at the 400 cycles to a battery thickness right before the initial charge and discharge is calculated to obtain a thickness increase rate, which is shown in Table 1 below.

**(Table 1)**

| | Chemical Formula 1-1 (parts by weight) | Chemical Formula 2-2A (wt%) | Capacity retention @400 cyc (%) | Thickness increase rate @400 cyc (%) |
|---|---|---|---|---|
| Comparative Example 1 | 0 | 0 | 83.5 | 2.4 |
| Comparative Example 2 | 0.25 | 0 | 85.3 | 3.6 |
| Comparative Example 3 | 0.5 | 0 | 86.8 | 6.9 |
| Comparative Example 4 | 0 | 1 | 86.9 | 8.9 |
| Example 1 | 0.25 | 1 | 88.4 | 2.6 |
| Example 2 | 0.25 | 2 | 88 | 2.4 |
| Comparative Example 5 | 2 | 1 | 80.1 | 10.3 |
| Comparative Example 6 | 0.25 | 5 | 77.8 | 13.2 |

Referring to Table 1, Comparative Examples 2 and 3, in which the first compound is added, have a problem of increasing a battery thickness increase rate at the 400 cycles according to an addition content. Comparative Example 4, in which the second compound alone is added, has a problem of increasing a battery thickness increase rate at the 400 cycles, compared with Comparative Example 1. On the other hand, the example embodiments exhibit improved low-temperature cycle-life characteristics, compared with the comparative examples, and maintain a similar thickness increase rate to Comparative Example 1.

On the other hand, Comparative Example 5, in which the compound represented by Chemical Formula 1 is used in an amount of 2 wt% or more, and Comparative Example 6, in which the compound represented by Chemical Formula 2 is used in an amount of 5 wt% or more, exhibit a high battery thickness increase rate at the 400^{th} cycle and deteriorated capacity retention. On the contrary, Examples 1 and 2, in which the compound represented by Chemical Formula 1 is used in an amount of less than 2 wt%, and the compound represented by Chemical Formula 2 is used in an amount of less than 5 wt%, exhibit excellent effects of improving cycle-life characteristics and reducing a thickness increase rate.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

### <Description of Symbols>

| | | | |
|---|---|---|---|
| 100: | rechargeable lithium battery | 112: | negative electrode |
| 113: | separator | 114: | positive electrode |
| 120: | battery case | 140: | sealing member |

## Claims

1. An electrolyte for a rechargeable lithium battery, comprising
a non-aqueous organic solvent, a lithium salt, and an additive,
wherein the additive comprises
(i) a first compound that is a compound represented by Chemical Formula 1, CsPF₆, or a combination thereof, and
(ii) a second compound that is a compound represented by Chemical Formula 2-1, a compound represented by Chemical Formula 2-2, or a combination thereof: 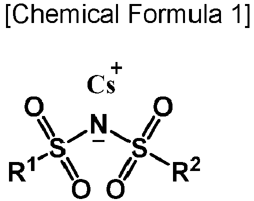
wherein, in Chemical Formula 1, R¹ and R² are each independently a fluoro group or a C1 to C4 fluoroalkyl group substituted with at least one fluoro group. 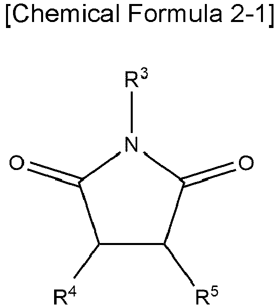 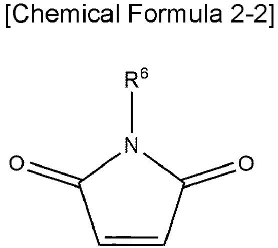
R³ in Chemical Formula 2-1 and R⁶ in Chemical Formula 2-2 are each independently a substituted or unsubstituted C1 to C8 alkyl group, a substituted or unsubstituted C3 to C10 cycloalkyl group, a substituted or unsubstituted C6 to C12 aryl group, a substituted or unsubstituted C1 to C8 alkoxy group, a substituted or unsubstituted C1 to C8 alkoxycarbonyl group, a halogen group, a cyano group, a hydroxy group, or a thiol group, and
in Chemical Formula 2-1, R⁴ and R⁵ are each independently hydrogen, a substituted or unsubstituted C1 to C8 alkyl group, a substituted or unsubstituted C3 to C10 cycloalkyl group, a substituted or unsubstituted C6 to C12 aryl group, a substituted or unsubstituted C1 to C8 alkoxy group, a substituted or unsubstituted C1 to C8 alkoxycarbonyl group, a halogen group, a cyano group, a hydroxy group, or a thiol group.

2. The electrolyte of claim 1, wherein
the compound represented by Chemical Formula 1 is represented by Chemical Formula 1-1 or 1-2:

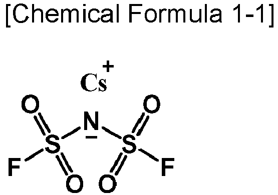

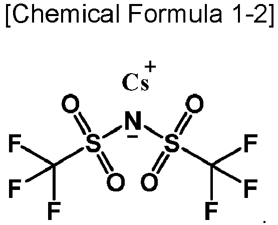

3. The electrolyte of claim 1 or claim 2, wherein
the first compound is included in an amount of 0.01 parts by weight to 1.9 parts by weight based on 100 parts by weight of the total amount of the non-aqueous organic solvent and the lithium salt.

4. The electrolyte of any one of claims 1 to 3, wherein
the first compound is included in an amount of 0.01 parts by weight to 1.0 parts by weight based on 100 parts by weight of the total amount of the non-aqueous organic solvent and the lithium salt; and/or
R³ in Chemical Formula 2-1 and R⁶ in Chemical Formula 2-2 are each independently a substituted or unsubstituted C1 to C8 alkyl group, a substituted or unsubstituted C3 to C10 cycloalkyl group, a substituted or unsubstituted C1 to C8 alkoxy group, or a substituted or unsubstituted C1 to C8 alkoxycarbonyl group.

5. The electrolyte of any one of claims 1 to 4, wherein
R³ in Chemical Formula 2-1 and R⁶ in Chemical Formula 2-2 are each independently methyl, ethyl, n-propyl, isopropyl, cyclopropyl, n-butyl, sec-butyl, isobutyl, tert-butyl, cyclobutyl, methoxy, ethoxy, propoxy, or butoxy.

6. The electrolyte of any one of claims 1 to 5, wherein
Chemical Formula 2-1 is represented by Chemical Formula 2-1A and Chemical Formula 2-2 is represented by Chemical Formula 2-2A:

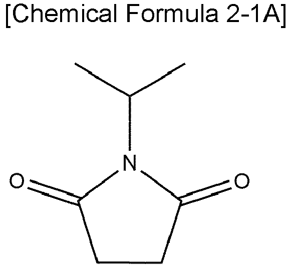

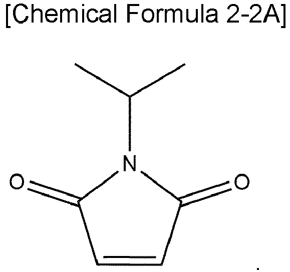

7. The electrolyte of any one of claims 1 to 6, wherein
the second compound is included in an amount of 0.1 parts by weight to 4.9 parts by weight based on 100 parts by weight of the total amount of the non-aqueous organic solvent and the lithium salt.

8. The electrolyte of any one of claims 1 to 7, wherein
the second compound is included in an amount of 0.1 parts by weight to 3 parts by weight based on 100 parts by weight of the total amount of the non-aqueous organic solvent and the lithium salt; and/or a weight ratio of the first compound and the second compound is 1:1 to 1:20.

9. The electrolyte of any one of claims 1 to 8, wherein
the additive of the electrolyte further comprises a third compound represented by Chemical Formula 3: 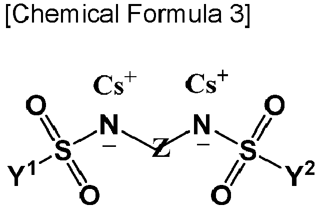
wherein, in Chemical Formula 3,
Z is C(=O) or S(=O)₂, and
Y' and Y² are each independently a fluoro group or a C1 to C5 fluoroalkyl group substituted with at least one fluoro group.

10. The electrolyte of claim 9, wherein
the third compound represented by Chemical Formula 3 is represented by any one of Chemical Formulas 3-1 to 3-8: 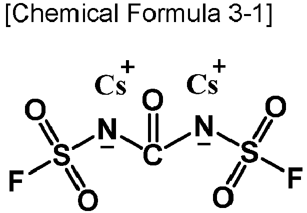 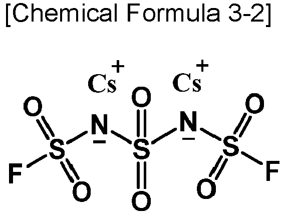 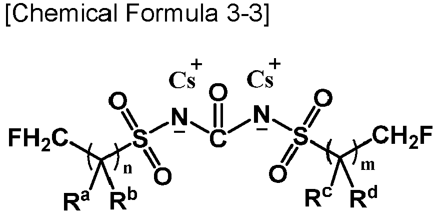 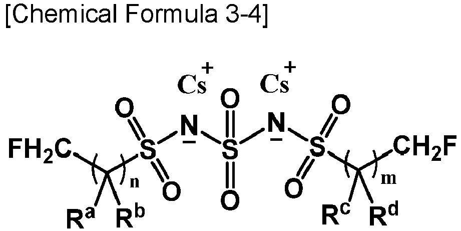 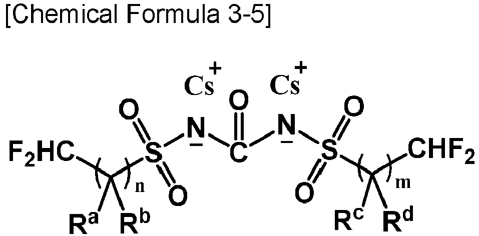 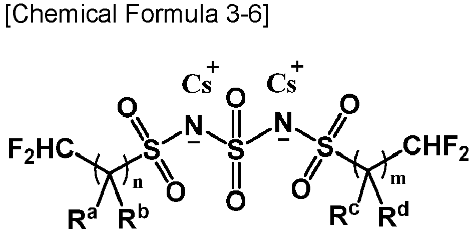 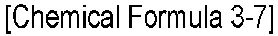 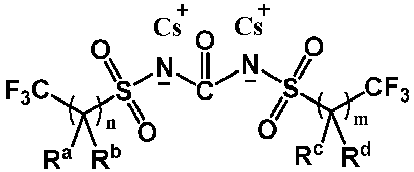 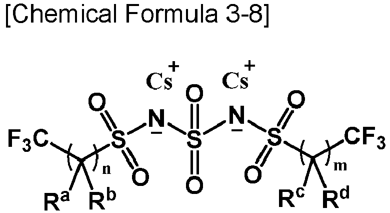 wherein, in Chemical Formulas 3-3 to 3-8, R^{a}, R^{b}, R^{c}, and R^{d} are each independently hydrogen or fluoro group, and n and m are each independently an integer of 0 or 4.

11. The electrolyte of claim 9 or claim 10, wherein
third compound is included in an amount of 0.01 parts by weight to 5 parts by weight based on 100 parts by weight of the total amount of the non-aqueous organic solvent and the lithium salt.

12. The electrolyte of any one of claims 1 to 11, wherein
the electrolyte further comprises other additives, and the other additives comprise at least one selected from vinylene carbonate (VC), fluoroethylene carbonate (FEC), difluoroethylene carbonate (DFEC), chloroethylene carbonate (CEC), dichloroethylene carbonate (DCEC), bromoethylene carbonate (BEC), dibromoethylene carbonate (DBEC), nitroethylene carbonate, cyanoethylene carbonate, vinylethylene carbonate (VEC), succinonitrile (SN), adiponitrile (AN), 1,3,6-hexane tricyanide (HTCN), propene sultone (PST), propane sultone (PS), lithium tetrafluoroborate (LiBF₄), lithium difluorophosphate (LiPO₂F₂), 2-fluoro biphenyl (2-FBP), or a combination thereof; and/or
in the electrolyte, the non-aqueous organic solvent comprises a carbonate-based solvent and an ester-based solvent.

13. A rechargeable lithium battery, comprising
a positive electrode comprising a positive electrode active material,
a negative electrode comprising a negative electrode active material,
a separator between the positive electrode and the negative electrode, and
the electrolyte of any one of claims 1 to 12.

14. The rechargeable lithium battery of claim 13, wherein
the positive electrode active material comprises a lithium cobalt-based oxide; or
the positive electrode active material comprises a lithium cobalt-based oxide; and the lithium cobalt-based oxide is represented by Chemical Formula 4:
[Chemical Formula 4] Liₐ₁COₓ₁M¹_{y1}O_{2-b1}X_{b1}
wherein, in Chemical Formula 4,
0.9≤a1≤1.8, 0.7≤x1≤1, 0≤y1≤0.3, 0.9≤x1+y1≤1.1, 0≤b1≤0.1, M¹ is at least one element selected from Al, B, Ba, Ca, Ce, Cr, Cu, Fe, Mg, Mn, Mo, Ni, Se, Si, Sr, Ti, V, W, Y, Zn, and Zr, and X is at least one element selected from F, P, and S.

15. The rechargeable lithium battery of claim 13 or 14, wherein either (A) or (B)
(A) the positive electrode active material comprises
a first positive electrode active material that is particles comprising a lithium cobalt-based oxide and has an average particle diameter (D50) of 9 µm to 25 µm, and
a second positive electrode active material that is particles comprising a lithium cobalt-based oxide and has an average particle diameter (D50) of 1 µm to 8 µm; or
(B) the positive electrode active material comprises
a first positive electrode active material that is particles comprising a lithium cobalt-based oxide and has an average particle diameter (D50) of 9 µm to 25 µm, and
a second positive electrode active material that is particles comprising a lithium cobalt-based oxide and has an average particle diameter (D50) of 1 µm to 8 µm and
wherein the first positive electrode active material is included in an amount of 60 wt% to 90 wt%, and the second positive electrode active material is included in an amount of 10 wt% to 40 wt% based on the total amount of first positive electrode active material and the second positive electrode active material.
